(19) Europäisches Patentamt
European Patent Office
Office européen des brevets

(11) EP 2 225 939 A2

(12) **EUROPEAN PATENT APPLICATION**

(43) Date of publication:
**08.09.2010 Bulletin 2010/36**

(21) Application number: **10158601.4**

(22) Date of filing: **12.10.2000**

(51) Int Cl.:
***A01N 43/40*** *(2006.01)* ***A01N 39/04*** *(2006.01)*
***A01P 13/00*** *(2006.01)*

(84) Designated Contracting States:
**AT BE CH CY DE DK ES FI FR GB GR IE IT LI LU MC NL PT SE**
Designated Extension States:
**AL LT LV MK RO SI**

(30) Priority: **14.10.1999 US 159383 P**

(62) Document number(s) of the earlier application(s) in accordance with Art. 76 EPC:
**08150387.2 / 1 964 469**
**04021891.9 / 1 486 119**
**03017669.7 / 1 369 039**
**00972742.1 / 1 220 609**

(27) Previously filed application:
**12.10.2000 EP 08150387**

(71) Applicant: **BASF SE**
**67056 Ludwigshafen (DE)**

(72) Inventors:
- **Pidskalny, Ronald,Steven**
  **Alberta T6H OZ9 (CA)**
- **Killins, Roy,Allan**
  **Alberta T1H 1H1 (CA)**

Remarks:
This application was filed on 31-03-2010 as a divisional application to the application mentioned under INID code 62.

(54) **Synergistic herbicidal methods & composition**

(57) The present invention provides a method for the synergistic control of undesirable plants such as Polygonum, Kochia, Galeopsis, Galium, Stelaria, Sinapis, and Avena which comprises applying to the plants or their locus a synergistically effective amount of an aryloxypicolinamide herbicide in combination with one or two selected additional herbicidal compounds. Further provided are synergistic herbicidal compositions comprising an aryloxypicolinamide herbicide arid one or two selected additional herbicidal compounds.

EP 2 225 939 A2

Printed by Jouve, 75001 PARIS (FR)

## Description

Aryloxypicolinamides such as those described in U.S. 5,294,597 demonstrate excellent herbicidal activity, in particular against broadleaf weeds in cereal crops. However, said aryloxypicolinamides, when used as the sole active ingredient, do not always achieve effective control of the full spectrum of weed species encountered in commercial agronomic practice at application rates required for acceptable crop safety. Such gaps in the spectrum of control can often be remedied by co-treatment with another herbicide known to be effective against the relevant weed species. It has been disclosed (U.S. 5,674,807) that selected combinations of aryloxypicolinamides produce not merely the expected additive effect, but may exhibit a significant synergistic effect (i.e., the combination shows a much higher level of activity than that which could be predicted from that of the individual components). This synergistic effect enables a greater margin of safety for the crop species. However, the disclosure is limited to two-way combinations of aryloxypicolinamides and members of selected known chemical classes which do not include herbicidal partners in the imidazolinone, cyclohexanedione, aryloxyphenoxypropionic acid, or pyridinecarboxylic acid classes. Moreover, although the phenoxyacetic acid chemical class is disclosed, 2,4-dichlorophenoxyacetic acid (2,4-D), its esters and salts are not specifically exemplified.

Therefore it is an object of this invention to provide synergistic, crop-selective herbicidal combinations with broad-spectrum weed control.

It is another object of this invention to provide herbicidal compositions useful for the synergistic control of a broad-spectrum of weeds in the presence of a crop.

Although aryloxypicolinamide compounds demonstrate excellent herbicidal activity, when applied alone they do not always achieve the desired spectrum of weed control at rates required for acceptable crop safety. Surprisingly, it has now been found that a two-way combination comprising an aryloxypicolinamide compound of formula I

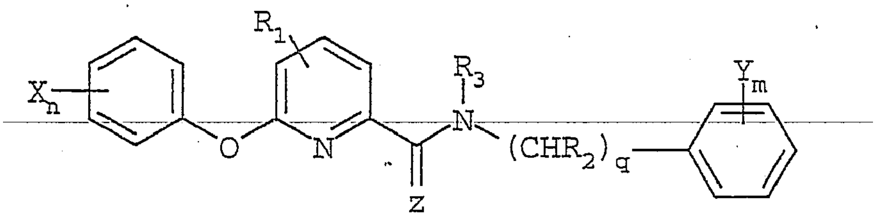

I

wherein

| | |
|---|---|
| Z | represents an oxygen or sulfur atom; |
| $R_1$ | represents a hydrogen or halogen atom or an alkyl or halo- alkyl group; |
| $R_2$ | represents a hydrogen or an alkyl group; |
| q | is 0 or 1; |
| $R_3$ | represents a hydrogen or an alkyl or alkenyl group; the or |
| each group X | independently represents a halogen atom or an optionally substituted alkyl or alkoxy group, preferably a haloalkyl group, or an alkenyloxy, cyano, carboxy, alkoxycarbonyl, (alkylthio)carbonyl, alkylcarbonyl, amido, alkylamido, nitro, alkylthio, halo- alkylthio, alkenylthio, alkynylthio, alkylsulphinyl, al- kylsulphonyl, alkyloxyminoalkyl or alkenyloximinoalkyl group; |
| n | is 0 or an integer from 1 to 5; |

the or each group Y independently represents a halogen atom or an alkyl, nitro, cyano, haloalkyl, alkoxy or haloalkoxy group; and

m is 0 or an integer from 1 to 5

or one of its environmentally compatible salts;

plus a second herbicide selected from 2,4-dichlorophenoxyacetic acid (2,4-D) or one of its environmentally compatible esters or salts, an imidazolinone, a cyclohexanedione, an aryloxyphenoxypropionic acid, or a pyridinecarboxylic acid herbicide demonstrates a synergistic herbicidal effect. Further, unexpectedly, a selected three-way combination comprising an aryloxypicolinamide compound of formula I and 2,4-D or one of its environmentally compatible esters or salts; and a third herbicide selected from the group consisting of an imidazolinone, a cyclohexanedione, and an aryloxyphenoxypropionic acid herbicide produces a significant synergistic effect. Advantageously, the synergistic two-way and three-way combinations of the invention allow for lower application rates of said aryloxypicolinamide with concomittant increased spectrum of weed control. Moreover, the synergistic herbicidal methods and compositions of the invention allow for effective resistance management.

The present invention provides a method for the synergistic control of undesirable plants such as Polygonum, Kochia, Galeopsis, Galium, Stelaria, Sinapis, and Avena which comprises applying to the locus of said plants or to the foliage or stems of said plants a synergistically effective amount of a two-way combination comprising an aryloxypicolinamide compound of formula I plus a second herbicide selected from 2,4-D or one of its environmentally compatible esters or salts, an imidazolinone, a cyclohexanedione, an aryloxyphenoxypropionic acid, or a pyridinecarboxylic acid herbicide. The present invention also provides a method for the synergistic control of undesirable plants which comprises applying to the locus of said plants a synergistically effective amount of a three-way combination comprising an aryloxypicolinamide compound of formula I, 2,4-D or one of its environmentally compatible esters or salts, and a third herbicide selected from the group consisting of an imidazolinone, a cyclohexanedione, or an aryloxyphenoxypropionate herbicide.

The present invention also provides a synergistic herbicidal composition which comprises an agriculturally acceptable carrier and a synergistically effective amount of a two-way combination of an aryloxypicolinamide compound of formula I plus a second herbicide selected from 2,4-D or one of its environmentally compatible esters or salts, an imidazolinone, a cyclohexanedione, an aryloxyphenoxypropionic acid, or a pyridinecarboxylic acid herbicide; or a three-way combination of an aryloxypicolinamide compound of formula I, 2,4-D or one of its environmentally compatible esters or salts, and a third herbicide selected from the group consisting of an imidazolinone, a cyclohexanedione, and an aryloxyphenoxypropionate herbicide.

Aryloxypicolinamides of formula I

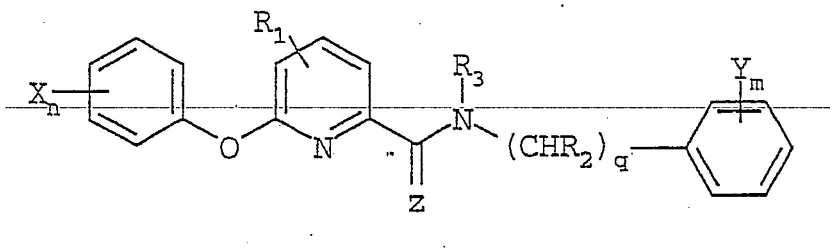

I

wherein Z, $R_1$, $R_2$, $R_3$, X, n, Y and m are defined herein above and methods for their preparation are described in U.S. 5,294,597. Said aryloxypicolinamides demonstrate excellent herbicidal activity, in particular against broadleaf weeds in cereal crops. However, said aryloxypicolinamides when used as the sole active ingredient do not always achieve effective control of the full spectrum of weed species encountered in commercial agronomic practice, in conjunction with reliable selectivity for the crop species.

Surprisingly, it has now been found that a two-way combination of an aryloxypicolinamide of formula I and a second herbicide selected from 2,4-D or one of its environmentally compatible esters or salts, an imidazolinone, a cyclohexanedione, an aryloxyphenoxypropionic acid, or a pyridinecarboxylic acid herbicide provides synergistic control of troublesome weeds such as *Polygonum, Kochia, Galeopsis, Galium, Stelaria, Sinapis, and Avena.* Also, surprisingly, a three-way combination of an aryloxypicolinamide of formula I and 2,4-D or one of its environmentally compatible esters or salts plus a third herbicidal compound selected from the group consisting of an imidazolinone, a cyclohexanedione, and an aryloxyphenoxypropionic acid herbicide provides synergistic weed control. That is, the application of the two-way or three-way combinations of the invention gives a mutual reinforcing action such that the application rates of the individual herbicidal components can be reduced and still the same herbicidal effect is achieved or, alternatively, the application of the combination of herbicidal components demonstrates a greater herbicidal effect than expected from the effect of the application of the individual herbicidal components when applied singly at the rate at which they are present in the combination (synergistic effect) .

The aryloxypicolinamides of formula I may exist in the form of their environmentally compatible salts. Suitable salts are, in general, the salts of those cations, or the acid addition salts of those acids, whose cations, or anions, respectively, do not adversely affect the herbicidal action of the active ingredients.

Suitable cations are, in particular, ions of the alkali metals, preferably lithium, sodium and potassium, of the alkaline earth metals, preferably calcium and magnesium, and of the transition metals, preferably manganese, copper, zinc and iron, and also ammonium, it being possible in this case, if desired, for one to four hydrogen atoms to be replaced by $C_1$-$C_4$-alkyl, hydroxy-$C_1$-$C_4$-alkyl, $C_1$-$C_4$-alkoxy-$C_1$-$C_4$-alkyl, hydroxy-$C_1$-$C_4$-alkoxy-$C_1$-$C_4$-alkyl, phenyl or benzyl, preferably ammonium, dimethylammonium, diisopropylammonium, tetramethylammonium, tetrabutylammonium, 2-(2-hydroxyeth-1-oxy)eth-1-yl ammonium, di (2-hydroxyeth-1-yl) ammonium, trimethylbenzylammonium, furthermore phosphonium ions, sulfonium ions, preferably tri($C_1$-$C_4$-alkyl)sulfonium and sulfoxonium ions, preferably, tri ($C_1$-$C_4$-alkyl) sulfoxonium.

Anions of suitable acid addition salts are mainly chloride, bromide, fluoride, hydrogen sulfate, sulfate, dihydrogen phosphate, hydrogen phosphate, nitrate, hydrogen carbonate, carbonate, hexafluorosilicate, hexafluorophosphate, benzoate and the anions of $C_1$-$C_4$-alkanoic acids, preferably formate, acetate, propionate and butyrate.

In the specification and claims, the term 2,4-D designates 2,4-dichlorophoxyacetic acid. 2,4-D may also exist in the form of its environmentally compatible esters or salts. Suitable salts are, in general, the salts of those cations, which do not adversely affect the herbicidal action of the active ingredients.

Suitable cations are, in particular, ions of the alkali metals, preferably lithium, sodium and potassium, of the alkaline earth metals, preferably calcium or magnesium, and of the transition metals, preferably manganese, copper, zinc and iron, and also ammonium, it being possible in this case if desired, for one to four hydrogen atoms to be replaced by $C_1$-$C_4$-alkyl, hydroxy-$C_1$-$C_4$-alkyl, $C_1$-$C_4$-alkoxy-$C_1$-$C_4$-alkyl, hydroxy-$C_1$-$C_4$-alkoxy-$C_1$-$C_4$-alkyl, phenyl or benzyl, preferably ammonium, dimethylammonium, diisopropylammonium, (2-hydroxy-eth-1-yl)ammonium, di(2-hydroxy-eth-1-yl) ammonium or tri(2-hydroxy-eth-1-yl)ammonium, Expecially suitable cations are sodium, dimethylammonium, di(2-hydroxy-eth-1-yl)ammonium and tri(2-hydroxyeth-1-yl)ammonium.

Suitable esters of 2,4-D are the $C_1$-$C_8$-alkyl esters, for example the methyl, ethyl, propyl, 1-methylethyl, butyl, 1-methylpropyl, 2-methylpropyl, 1,1-dimethylethyl, pentyl, 1-methylbutyl, 2-methylbutyl, 3-methylbutyl, 2,2-dimethylpropyl, 1-ethylpropyl, hexyl, 1,1-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1-ethyl-1-methylpropyl, 1-ethyl-3-methylpropyl, heptyl, 5-methyl-1-hexyl, octyl, 6-methyl-1-heptyl, 2-ethyl-1-hexyl or 4-ethyl-1-hexyl esters, or the $C_1$-$C_4$-alkoxy-$C_1$-$C_4$-alkyl esters for example the methoxymethyl, ethoxymethyl, propoxymethyl, (1-methylethoxy)methyl, butoxymethyl, (1-methylpropoxy)methyl, (2-methylpropoxy)-methyl, (1,1-dimethylethoxy)methyl, 2-(methoxy)ethyl, 2-(ethoxy)ethyl, 2-(propoxy)ethyl, 2 - (1-methylethoxy) ethyl, 2-(butoxy)ethyl, 2-(1-methylpropoxy)ethyl, 2-(2-methylpropoxy) ethyl, 2-(1,1-dimethylethoxy)ethyl, 2-(methoxy)propyl, 2-(ethoxy)propyl, 2-(propoxy)propyl, 2-(1-methylethoxy)-propyl, 2-(butoxy)propyl, 2-(1-methylpropoxy)propyl, 2-(2-methylpropoxy)propyl, 2-(1,1-dimethylethoxy)propyl, 3-(methoxy)propyl, 3-(ethoxy)-propyl, 3-(propoxy)propyl, 3-(1-methylethoxy)propyl, 3-(butoxy)propyl, 3-(1-methylpropoxy)propyl, 3-(2-methylpropoxy)propyl, 3-(1,1-dimethylethoxy)propyl, 2-(methoxy)butyl, 2-(ethoxy)butyl, 2- (propoxy)butyl, 2-(1-methylethoxy)butyl, 2-(butoxy)butyl, 2-(1-methylpropoxy)butyl, 2-(2-methylpropoxy)butyl, 2-(1,1-dimethylethoxy)butyl, 3-(methoxy)butyl, 3-(ethoxy)-butyl, 3-(propoxy)butyl, 3-(methylethoxy)butyl, 3-(butoxy)butyl), 3-(1-methylpropoxy)butyl, 3-(2-methylpropoxy)butyl, 3-(1,1-dimethylethoxy)butyl, 4-(methoxy)butyl, 4-(ethoxy)butyl, 4-(propoxy)butyl, 4-(1-methylethoxy)butyl, 4-(butoxy)butyl, 4-(1-methylpropoxy)butyl, 4-(2-methylpropoxy)butyl or 4-(1,1,-dimethylethoxy)butyl esters;

Especially suitable esters are the 1-methyl-1-ethyl, butyl, 6-methyl-1-heptyl, 2-ethyl-1-hexyl or 2-butoxy-1-ethyl esters.

Examples of an imidazolinone herbicide suitable for use in the methods and compositions of the invention include imazapyr, imazethapyr, imazapic, imazaquin, imazamox, imazamethabenz methyl, imazamethapyr or the like or one of its environmetntally compatible salts, preferably imazamethabenz methyl. Suitable salts are in general, the salts of those anions which do not adversely affect the herbicidal action of the active ingredient. They are similar to those listed for the compounds of formula I.

A cyclohexanedione herbicide suitable for use in the methods and compositions of the invention include sethoxydim, clethodim, alloxydim, tralkoxydim, cycloxydim, butroxydin, clefoxydim, cloproxydim, tepraloxydim or the like, or one of its environmentally compatible salts preferably tralkoxydim. Suitable salts are in general the salts of those cations which do not adversely affect the herbicidal action of the active ingredient. They are similar to those listed tor the compounds of formula I.

Exemplary of aryloxyphenoxypropionate herbicides suitable for use in the inventive methods and compositions are fluazifop-p-butyl, fenoxaprop-ethyl, fenoxaprop-p-ethyl, quizalofop-p-terfuryl, quizalofop-p, haloxyfop-methyl, clodinafop-propargyl, isoxapurifop, cyhalofop butyl, fenthioprop, propaquizafop, quizalafop-ethyl, quizalafop-P-ethyl or the like, or one of its environmentally compatible salts or esters, preferably fenoxaprop-p-ethyl. Suitable salts or esters are similar to those listed for 2,4-D.

A pyridinecarboxylic acid herbicide such as picloran, clopyralid, or the like, preferably clopyralid, is suitable for use in the two-way combination of the invention. Also salts thereof may be used. Suitable salts are similar to those listed for 2,4-D.

In the specification and claims, the term alkyl (alone or in combination) represents a $C_1$-$C_6$-alkyl group, especially a. $C_1$-$C_4$-alkyl group; the term alkoxy(alone or in combination) represents a $C_1$-$C_6$-alkoxy group, especially a $C_1$-$C_4$-alkoxy group; the term alkenyl (alone or in combiantion) represents a $C_3$-$C_6$-alkenyl group, especially a $C_3$-$C_4$-alkenyl group; the term alkynyl represents a $C_3$-$C_6$-alkynyl group, especially a $C_3$-$C_4$-alkynyl group.

Preferred synergistic combinations of the invention are those two-way or three-way combinations containing a formula I aryloxypicolinamide wherein

Z is oxygen;

$R_1$ is hydrogen;

q is 0;

$R_3$ is hydrogen;

X is haloalkyl; and

Y is hydrogen or fluorine.

Especially those two-way or three-way combinations containing a formula I aryloxypicolinamide wherein n=1 and X is linked in meta-position to the phenyl radical (with regard to the oxygen bridge).

More preferred synergistic two-way and three-way combinations are those wherein the formula I compound is N-(4-fluorophenyl)-6-[3-trifluoromethyl)phenoxy]-2-pyridine carboxamide ilustrated below , and hereinafter designated, picolinafen.

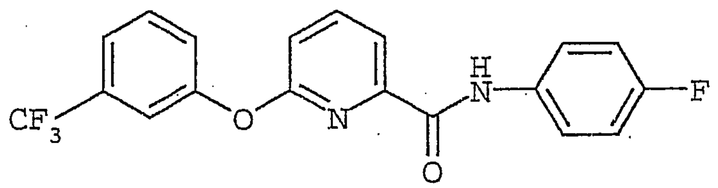

picolinafen

Preferred second herbicide for the two-way combinations of the invention are 2,4-D, imazamethabenz methyl, tralkoxydim, fenoxaprop-p-ethyl, and clopyralid.

Another prefered embodiment of the invention are those two-way combinations wherein the second herbicide is 2,4-D or one of its environmentally compatible esters or salt, expecially 2,4-D.

Another preferred embodiment of the invention are those two-way combinations wherein the second Herbicide is selected from the group consisting of an imidazolinone herbicide, a cyclohexanedione herbicide and a pyridinecarboxylic acid herbicide. Especially the second herbicide is imazamethabenz methyl, tralkoxydim or clopyralid.

Another preferred embodnient of the invention are those two-way combinations wherein the second herbicide is an aryoxyphenoxypropionate herbicide. Especially the second herbicide is fenoxaprop-p-ethyl.

Preferred third herbicides for the three-way combination of the invention are imazamethabenz methyl, tralkoxydim or fenoxaprop-p-ethyl.

Another preferred embodiment of the invention are those three-way combinations wheren the third herbicide is selected from the group consisting of an imidazolinone herbicide and a cyclohexanedione herbicide.

Especially the third herbicide is imazamethabenz methyl or tralkoxydim.

Another preferred embodiment of the invention are those three-way combinatins wherein the third herbicide is an ayloxyphenoxypropionate herbicide. Especially the second herbicide is fenoxaprop-p-ethyl.

In actual practice, the combination of the invention may be applied simultaneously (as a tank mix or a premix), separately or sequentially.

Thus, in accordance with the method of invention a synergistically effective amount of a two-way combination

of aryloxypicolinamide and a second herbicide selected from 2,4-D, or one of its environmentally compatible salts or esters, an imidazolinone, a cyclohexanedione, an aryloxyphenoxypropionic acid, or a pyridinecarboxylic acid herbicide; or a synergistically effective amount of a three-way combination of an aryloxypicolinamide, 2,4-D, or one of its environmentally compatible salts or esters and a third herbicide selected from an imidazolinone, a cyclohexanedione, or an aryloxyphenoxypropionate is applied to the locus, foliage or stems of undesirable plants, particularly plants selected from the genera Polygonum, Kochia, Galeopsis, Galium, Stelaria, Sinapis, and Avena, optionally in the presence of a crop, preferably a cereal crop such as wheat, barley, rice, corn, rye or the like.

The synergistically effective amount of the two- and three-way combinations described above may vary according to prevailing conditions such as the particular second and third component present, weed pressure, application timing, weather conditions, soil conditions, mode of application, topographical character, target crop species and the like.

Preferred two-way combinations of the invention are those wherein the weight/weight ratio of the aryloxypicolinamide of formula I to the second compound is about:

aryloxypicolinamide:2,4 D (or its salts or ester), 1:1 to 1:25;

aryloxypicolinamide:imidazolinone herbicide, 1:1 to 1:35;

aryloxypicolinamide:cyclohexenedione herbicide, 1:1 to 1:20;

aryloxypicolinamide:aryloxyphenoxypropionate herbicide, 1:1 to 1:10;

aryloxpicalinamide:pyridicarboxylic acid herbicide, 1:1 to 1:15.

More preferred two-way combinations of the invention are those wherein the weight/weight ratio of picolinafen to the second component is about:

picolinafen:2,4-D, 1:1 to 1:25;

picolinafen:imazethabenz methyl, 1:1 to 1:35;

picolinafen:tralkoxydim, 1:1 to 1:20;

picolinafen:fenoxaprop-p-ethyl, 1:1 to 1:10; or

picolinafen:clopyralid, 1:1 to 1:15.

Preferred three-way combinations of the invention are those wherein the weight/weight ratio of the aryloxypicolinamide of formula I to 2,4-D (or its salts or esters) to third component is about:

aryloxypicolinamide: 2,4 D (or its salts or esters): imidazolinone herbicide, 1:1:1 to 1:35:25;

aryloxypicolinamide: 2,4 D (or its salts or esters): cyclohexanedione herbicide; 1:1:1 to 1:20:25;

aryloxypicolinamide: 2,4 D (or its salts or esters): aryloxyphenoxypropionate herbicide, 1:1:1 to 1:10:25.

More preferred three-way combinations of the invention are those wherein the weight/weight/weight ratio of picolinafen to 2,4-D to third component is about:

picolinafen:2,4-D:imazamethabenz methyl, 1:1:1 to 1:35:25;

picolinafen:2,4-D:tralkoxydim, 1:1:1 to 1:20:25; or

picolinafen:2,4-D:fenoxaprop-p-ethyl, 1:1:1 to 1:10:25.

The present invention also provides a synergistic herbicidal composition comprising an agriculturally acceptable carrier and a synergistically effective amount of a two-way combination of an aryloxypicolinamide of formula I and a second herbicidal compound selected from the group consisting of 2,4-D, or one of its environmentally compatible salts or esters an imidazolinone herbicide, a cyclohexanedione herbicide, an aryloxyphenoxypropionic acid herbicide and a

pyridinecarboxylic acid herbicide. The present invention further provides a synergistic herbicidal composition which comprises an agriculturally acceptable carrier and a synergistically effective amount of a three-way combination of an aryloxypicolinamide compound of formula 1, 2,4-D, or one of its environmentally compatible salts or esters and a third herbicidal compound selected from the group consisting of an imidazolinone herbicide, a cyclohexanedione herbicide, and an aryloxyphenoxypropionate herbicide.

The agriculturally acceptable carrier may be a solid or a liquid, preferably a liquid, more preferably water. While not required, the combination compositions of the invention may also contain other additives such as fertilizers, inert formulation aids, i.e. surfactants, emulsifiers, defoamers, dyes, extenders or any of the conventional inert ingredients typically employed in herbicidal formulated products.

Compositions according to the invention may be formulated in any conventional form, for example in the form of a twin pack, or as an aqueous concentrate, soluble granular, dispersible granular or the like.

Preferred two-way combination compositions of the invention are those compositions wherein the aryloxypicolinamide compound is picolinafen. Also preferred are those synergistic two-way combination compositions having a second herbicide selected from the group consisting of 2,4-D, imazamethabenz methyl, tralkoxydim, fenoxaprop-p-ethyl and clopyralid. More preferred two-way combination compositions of the invention are those compositions of the invention wherein the weight/weight ratio of picolinafen to second component is about:

picolinafen:2,4-D, 1:1 to 1:25;

picolinafen:imazethabenz methyl, 1:1 to 1:35;

picolinafen:tralkoxydim, 1:1 to 1:20;

picolinafen:fenoxaprop-p-ethyl, 1:1 to 1:10; or

picolinafen:clopyralid, 1:1 to 1:15.

Preferred three-way combination compositions of the invention are those compositions wherein the picolinamide compound is picolinafen. Also preferred are those synergistic three-way combination compositions having a third herbicide selected from the group consisting of imazamethabenz methyl, tralkoxydim and fenoxaprop-p-ethyl. More preferred three-way combination compositions of the invention are those compositions wherein the weight/weight/weight ratio of picolinafen to 2,4-D to third component is about:

picolinafen:2,4-D:imazamethabenz methyl, 1:1:1 to 1:35:25;

picolinafen:2,4-D:tralkoxydim, 1:1:1 to 1:20:25; or

picolinafen:2,4-D:fenoxaprop-p-ethyl, 1:1:1 to 1:10:25.

For a more clear understanding of the invention, specific examples thereof are set forth below. These examples are merely illustrative, and are not to be understood as limiting the scope and underlying principles of the invention in any way.

In the following examples, synergism for two-way combinations is determined by the Colby method (S.R. Colby, Weeds 1967 (15), 20), i.e. the expected (or predicted) response of the combination is calculated by taking the product of the observed response for each individual component of the combination when applied alone divided by 100 and subtracting this value from the sum of the observed response for each component when applied alone. Synergism of the combination is then determined by comparing the observed response of the combination to the expected (or predicted) response as calculated from the observed responses of each individual component alone. If the observed response of the combination is greater than the expected (or predicted) response then the combination is said to be synergistic and falls within the definition of synergistic effect as previously defined.

The foregoing is illustrated mathematically below, wherein a two-way combination, $C_2$, is composed of component X plus component Y and Obs. designates the observed response of the combination $C_2$.

$$(X + Y) - \frac{XY}{100} = \text{Expected response (Exp.)}$$

$$\text{Synergism} \equiv \text{Obs.} > \text{Exp.}$$

In similar manner for the case of three-way combination, $C_3$, is composed of component X plus component Y plus component X and Obs. designates the observed response of the combination $C_3$.

$$(X + Y + Z) - \frac{(XY+XZ+YZ)}{100} + \frac{XYZ}{10000} = \text{Exp.}$$

$$\text{Synergism} \equiv \text{Obs.} > \text{Exp.}$$

In the following examples, crop tolerance ratings are taken periodically throughout the growing season. The first rating is taken one to two weeks after treatment and the final rating is taken just prior to harvest. For all treatments described in the following examples crop tolerance was commercially acceptable, i.e. ≤ 20% injury, on each of the three crops tested. None of the treatments demonstrated commercially unacceptable injury to barley, durum wheat or hard red spring wheat.

EXAMPLE 1

Evaluation of the Herbicidal Activity of a Combination of Picolinafen and 2,4-Dichlorophenoxyacetic Acid

Grassy and broadleaved weeds are either seeded perpendicular to the direction of the crop or broadcast in early to mid-May. The crop is seeded after the weed seed. Row width is 18 cm. The seed is drilled in with a Roger's 1.8 m width drill to a depth of 5 cm.

All trials employ standard accepted weed science procedures. Applications are made with a Roger's $CO_2$-powered shrouded sprayer. Test design is a modified randomized complete block design with four replications. All applications are made post-emergence to the weeds and crop.

The test solutions are prepared by tank-mixing sufficient quantities of aqueous solutions and/or dispersions of the test compounds.

The treated plots are examined at intervals during the growing season and rated for percent control of weeds and crop injury. The data listed is an average of the replicates for that treatment. The Colby method of analysis is used to determine the resultant biological effect of the combination treatment as compared to the biological effect of each component when applied alone. The data are reported in Table I.

As can be seen from the data shown in Table I, application of a combination of picolinafen plus 2,4-D gave significantly greater weed control than that which could be predicted from the weed control resulting from the application of either picolinafen alone or 2,4-D alone.

TABLE I

| Evaluation of the Herbicidal Activity of a Combination of Picolinafen plus 2,4-D | | | | |
|---|---|---|---|---|
| | *picolinafen 50g/ha* | *2,4-D 280g/ha* | *picolinafen + 2,4-D 50g/ha + 280 g/ha* | |
| *Weed Species* | Percent Control | | Observed | Expected |
| *Avena fatua* | *5* | *2* | *15* | *7* |
| *Chenopodium album* | *57* | *91* | *97* | *96* |

(continued)

| Evaluation of the Herbicidal Activity of a Combination of Picolinafen plus 2,4-D | | | | |
|---|---|---|---|---|
| | *picolinafen 50g/ha* | *2,4-D 280g/ha* | *picolinafen + 2,4-D 50g/ha + 280 g/ha* | |
| *Weed Species* | Percent Control | | Observed | Expected |
| *Polygonum convolvulus* | *54* | *48* | *80* | *76* |
| *Caleopsis tetrahit* | *59* | *2* | *70* | *60* |
| *Polygonum (smartweed) spp.* | *26* | *53* | *85* | *65* |
| *Vaccaria pyramaidata* | *63* | *51* | *97* | *82* |

EXAMPLE 2

Evaluation of the Herbicidal Activity of a Combination of Picolinafen and Imazamethabenz Methyl

Following essentially the same procedure described in Example 1 and employing picolinafen and imazamethabenz methyl, the data shown in Table II are obtained.

As can.be seen from the data in Table II, the application of a combination of picolinafen plus imazamethabenz methyl gives significantly greater weed control than that which could be predicted from the weed control resulting from the application of either picolinafen alone or imazamethabenz methyl alone.

TABLE II

| Evaluation of the Herbicidal Activity of a Combination of Picolinafen plus Imazamethabenz Methyl | | | | |
|---|---|---|---|---|
| *Weed Species* | *picolinafen 50g/ha* | *imazamethabenz methyl 400g/ha* | *picolinafen + imazamethabenz methyl 50g/ha + 400 g/ha* | |
| | Percent Control | | Observed | Expected |
| *Avena fatua* | *5* | *88* | *91* | *89* |
| *Setaria viridis* | *14* | *10* | *42* | *23* |
| *Brassica napus (Imidazolinone tolerant)* | *65* | *0* | *86* | *65* |
| *Chenopodium album* | *57* | *18* | *86* | *65* |
| *Galeopsis tetrahit* | *59* | *4* | *76* | *61* |
| *Galium aparine* | *28* | *48* | *90* | *63* |
| *Polygonum spp.* | *26* | *76* | *84* | *82* |
| *Kochia scoparia* | *59* | *31* | *85* | *72* |
| *Salsola kali* | *56* | *9* | *79* | *60* |
| *Vaccaria pyramaidata* | *63* | *20* | *77* | *70* |

EXAMPLE 3

Evaluation of the Herbicidal Activity of a Combination of Picolinafen and Tralkoxydim

Following essentially the same procedure as described in Example 1 and employing picolinafen and tralkoxydim, the data shown in Table III are obtained

As can be seen from the data shown on Table III, the application of a combination of picolinafen plus tralkoxydim gives significantly greater weed control than that which could be predicted from the weed control resulting from the application of either picolinafen alone or tralkoxydim alone.

TABLE III

| Evaluation of the Herbicidal Activity of a Combination of Picolinafen plus Tralkoxydim | | | | |
|---|---|---|---|---|
| | picolinafen 50g/ha | tralkoxydim 200g/ha | picolinafen + tralkoxydim 50g/ha + 200 g/ha | |
| Weed Species | Percent Control | | Observed | Expected |
| *Avena fatua* | 5 | 97 | 98 | 97 |
| *Sinapis arvensis* | 78 | 0 | 94 | 78 |
| *Brassica napus* | 70 | 0 | 95 | 70 |
| *Brassica napus (imidazolinone tolerant)* | 65 | 0 | 92 | 65 |
| Amaranthus retroflexus | 90 | 1 | 98 | 90 |
| Chenopodium album | 57 | 0 | 93 | 57 |
| *Polygonum convolvulus* | 54 | 0 | 87 | 54 |
| *Vaccaria pyramaidata* | 63 | 0 | 86 | 63 |

EXAMPLE 4

Evaluation of the Herbicidal Activity of a Combination of Picolinafen and Fenoxaprop-p-ethyl

Following essentially the same procedure as described in Example 1 and employing picolinafen and fenoxaprop-p-ethyl, the data shown in Table IV are obtained.

As can be seen from the data shown on Table IV, the application of a combination of picolinafen plus fenoxaprop-p-ethyl gives significantly greater.weed control than that which could be predicted from the weed control resulting from the application of either picolinafen alone or fenoxaprop-p-ethyl alone.

TABLE IV

| Evaluation of the Herbicidal Activity of a Combination of Picolinafen plus Fenoxaprop-p-ethyl | | | | |
|---|---|---|---|---|
| | picolinafen 50g/ha | fenoxaprop-p-ethyl 72g/ha | picolinafen + fenoxaprop-p-ethyl 50g/ha + 72 g/ha | |
| Weed Species | Percent Control | | Observed | Expected |
| *Sinapis arvensis* | 78 | 0 | 96 | 78 |
| *Setaria viridis* | 14 | 98 | 99 | 98 |
| *Brassica napus* | 70 | 0 | 97 | 70 |
| *Brassica napus (imidazolinone tolerant)* | 65 | 0 | 97 | 65 |
| Amaranthus retroflexus | 90 | 9 | 94 | 91 |
| Chenopodium album | 57 | 0 | 95 | 57 |
| *Polygonum convolvulus* | 54 | 0 | 74 | 54 |

(continued)

| Evaluation of the Herbicidal Activity of a Combination of Picolinafen plus Fenoxaprop-p-ethyl | | | | |
|---|---|---|---|---|
| | picolinafen 50g/ha | fenoxaprop-p-ethyl 72g/ha | picolinafen + fenoxaprop-p-ethyl 50g/ha + 72 g/ha | |
| Weed Species | Percent Control | | Observed | Expected |
| *vaccaria pyramaidata* | 63 | 0 | 71 | 63 |

EXAMPLE 5

Evaluation of the Herbicidal Activity of a Combination of Picolinafen and Clopyralid

Following essentially the same procedure as in Example 1 and employing picolinafen and clopyralid, the data shown in Table V are obtained.

As can be seen from the data shown on Table IV the application of a combination of picolinafen plus clopyralid gives significantly greater weed control than that which could be predicted from the weed control resulting from the application of either picolinafen alone or clopyralid alone.

TABLE V

| Evaluation of the Herbicidal Activity of a Combination of Picolinafen plus Clopyralid | | | | |
|---|---|---|---|---|
| | picolinafen 50g/ha | clopyralid 150g/ha | picolinafen + clopyralid 50g/ha + 150g/ha | |
| Weed Species | Percent Control | | Observed | Expected |
| *Sinapis arvensis* | 78 | 16 | 87 | 82 |
| *Brassica napus* | 70 | 12 | 78 | 74 |
| *Brassica napus (imidazolinone tolerant)* | 65 | 8 | 85 | 68 |
| Chenopodium album | 57 | 51 | 83 | 79 |
| *Stellaria media* | 64 | 10 | 70 | 68 |
| *Galium aparine* | 28 | 0 | 30 | 28 |

EXAMPLE 6

Evaluation of the Herbicidal Activity of a Combination of Picolinafen, Imazamethabenz Methyl and 2,4-D

Following essentially the same procedure as described in Example 1 and employing picolinafen, 2,4-D and imazamethabenz methyl, the data shown in Table VI are obtained.

As can be seen from the data on Table VI, the application of a combination of picolinafen, 2,4-D and imazamethabenz methyl gives significantly greater weed control than that which could be predicted from the weed control resulting from the application of picolinafen alone, 2,4-D alone or imazamethabenz methyl alone.

TABLE VI

| Evaluation of the Herbicidal Activity of a Combination of Picolinafen, 2,4-D and Imazamethabenz Methyl | | | | | |
|---|---|---|---|---|---|
| | picolinafen 50g/ha | imazamethabenz methyl 400 g/ha | 2,4-D 280g/ha | picolinafen + 2,4-D + imazamethabenz methyl 50g/ha + 280g/ha + 400g/ha | |
| Weed Species | Percent Control | | | Observed | Expected |
| *Avena fatua* | 5 | 88 | 2 | 91 | 89 |
| *Setaria viridis* | 14 | 10 | 0 | 49 | 23 |
| *Stellaria media* | 64 | 8 | 10 | 86 | 70 |
| *Galeopsis tetrahit* | 59 | 4 | 2 | 82 | 61 |
| *Galium aparine* | 28 | 48 | 43 | 94 | 79 |
| *Polygonum spp.* | 26 | 76 | 53 | 99 | 92 |
| Kochia scoparia | 59 | 31 | 52 | 93 | 86 |
| Salsola kali | 56 | 9 | 35 | 97 | 74 |
| *Vaccaria pyramaidata* | 63 | 20 | 51 | 93 | 85 |

EXAMPLE 7

Evaluation of the Herbicidal Activity of a Combination of Picolinafen, Tralkoxydim and 2,4-D

Following essentially the same procedure as described in Example 1 and employing picolinafen, 2,4-D, and tralkoxydim, the data shown in Table VII are obtained.

As can be seen from the data on Table VII, the application of a combination of picolinafen, 2,4-D and tralkoxydim gives significantly greater weed control than that which could be predicted from the weed control resulting from the application of picolinafen alone, 2,4-D alone or tralkoxydim alone.

TABLE VII

| Evaluation of the Herbicidal Activity of a Combination of Picolinafen plus 2,4-D and Tralkoxydim | | | | | |
|---|---|---|---|---|---|
| | picolinafen 50g/ha | tralkoxydim 200g/ha | 2,4-D 280g/ha | picolinafen + 2,4-D + tralkoxydim 50g/ha + 200g/ha + 280g/ha | |
| Weed Species | Percent Control | | | Observed | Expected |
| *Avena fatua* | 5 | 97 | 2 | 98 | 97 |
| *Sinapis arvensis* | 78 | 0 | 92 | 99 | 98 |
| *Brassica napus* | 70 | 0 | 93 | 100 | 98 |

(continued)

| Evaluation of the Herbicidal Activity of a Combination of Picolinafen plus 2,4-D and Tralkoxydim | | | | | |
|---|---|---|---|---|---|
| | picolinafen 50g/ha | tralkoxydim 200g/ha | 2,4-D 280g/ha | picolinafen + 2,4-D + tralkoxydim 50g/ha + 200g/ha + 280g/ha | |
| Weed Species | Percent Control | | | Observed | Expected |
| *Brassica napus (imidazolinone tolerant)* | 65 | 0 | 94 | 100 | 98 |
| *Chenopodium album* | 57 | 0 | 91 | 98 | 96 |
| *Polygonum convolvulus* | 54 | 0 | 48 | 90 | 76 |
| *Vaccaria pyramaidata* | 63 | 0 | 51 | 90 | 82 |

EXAMPLE 8

Evaluation of the Herbicidal Activity of a Combination of Picolinafen, 2,4-D and Fenoxaprop-p-ethyl

Following essentially the same procedure as described in Example 1 and employing picolinafen, 2,4-D and fenoxaprop-p-ethyl, the data shown in Table VIII are obtained.

As can be seen from the data shown in Table VIII, the application of a combination of picolinafen, 2,4-D and fenoxaprop-p-ethyl gives significantly greater weed control than that which could be predicted from the weed control resulting from the application of picolinafen alone, or 2,4-D alone or fenoxaprop-p-ethyl alone.

TABLE VIII

| Evaluation of the Herbicidal Activity of a Combination of Picolinafen, plus 2,4-D and Fenoxaprop-p-ethyl | | | | | |
|---|---|---|---|---|---|
| | picolinafen 50g/ha | fenoxaprop-p-ethyl 72 g/ha | 2,4-D 280g/ha | picolinafen + 2,4-D + fenoxaprop-p-ethyl 50g/ha + 280g/ha + 72g/ha | |
| Weed Species | Percent Control | | | Observed | Expected |
| *Brassica napus* | 70 | 0 | 93 | 100 | 98 |
| *Brassica napus (imidazolinone tolerant)* | 65 | 0 | 94 | 100 | 98 |
| *Chenopodium album* | 57 | 0 | 91 | 97 | 96 |
| *Polygonum convolvulus* | 54 | 0 | 48 | 93 | 76 |
| *Vaccaria pyramaidata* | 63 | 0 | 51 | 96 | 82 |

## Claims

1. A synergistic herbicidal composition which comprises an agriculturally acceptable carrier and a synergistically effective amount of a two-way combination of an aryloxypicolinamide of formula I

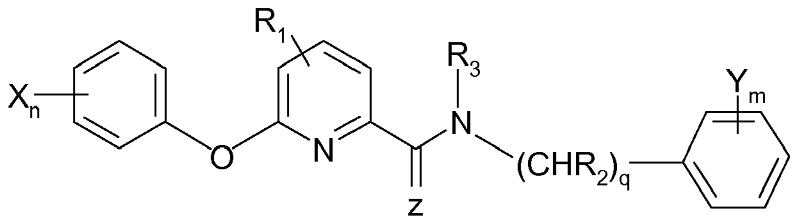

I

wherein

Z represents an oxygen or sulfur atom;
$R_1$ represents a hydrogen or halogen atom or an alkyl or haloalkyl group;
$R_2$ represents a hydrogen or an alkyl group;
q is 0 or 1;
$R_3$ represents a hydrogen or an alkyl or alkenyl group;

the or each group X independently represents a halogen atom or an optionally substituted alkyl or alkoxy group, preferably a haloalkyl group, or an alkenyloxy, cyano, carboxy, alkoxycarbonyl, (alkylthio)carbonyl, alkylcarbonyl, amido, al- kylamido, nitro, alkylthio, haloalkylthio, alkenylthio, alkynylthio, alkylsulphinyl, al- kylsulphonyl, alkyloxyiminoalkyl or alkenyloximinoalkyl group;

n is 0 or an integer from 1 to 5;

the or each group Y independently represents a halogen atom or an alkyl, nitro, cyano, haloalkyl, alkoxy or haloalkoxy group; and

m is 0 or an integer from 1 to 5;

or one of its environmentally compatible salts;
and a second herbicide selected from the group consisting of 2,4-D or one its environmentally compatible salts or esters..

**2.** The composition according to claim 1 having a formula I aryloxypicolinamide wherein

Z is oxygen;
$R_1$ is hydrogen;
q is 0;
$R_3$ is hydrogen;
X is haloalkyl; and
Y is hydrogen or fluorine.

**3.** The composition according to claim 2 wherein said formula I aryloxypicolinamide is picolinafen.

**4.** A method for the synergistic control of undesirable plants, which comprises applying to the locus of said plants or to the foliage or stems of said plants a synergistically effective amount of the compositions as claimed in any of claims 1 to 3.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5294597 A
- US 5674807 A


### Non-patent literature cited in the description


- **S.R. Colby.** *Weeds,* 1967, vol. 15, 20